(19) Europäisches Patentamt

European Patent Office

Office européen des brevets

(11) **EP 0 764 407 B1**

(12) **EUROPEAN PATENT SPECIFICATION**

(45) Date of publication and mention
of the grant of the patent:
**12.12.2001   Bulletin 2001/50**

(51) Int Cl.[7]: **A23P 1/04**, A23L 1/22,
A23P 1/08, A23L 1/237

(21) Application number: **96114325.2**

(22) Date of filing: **06.09.1996**

(54) **Seasoning mixture for the frozen food industry**

Gewürzegemisch für die Industrie der gefrorenen Nahrungsmittel

Mélange d'assaisonnement pour l'industrie des aliments surgelés

(84) Designated Contracting States:
**AT CH DE DK FI FR GB LI SE**

(30) Priority:   **25.09.1995   DE 19535582**

(43) Date of publication of application:
**26.03.1997   Bulletin 1997/13**

(73) Proprietor: **Bestfoods**
**Englewood Cliffs, New Jersey 07632-9976 (US)**

(72) Inventors:
• **Ammedick-Naumann, Claudia**
**71543 Wustenrot (DE)**

• **Caroly, Jürgen**
**74072 Heilbronn (DE)**

(74) Representative: **Lederer, Franz, Dr. et al**
**Lederer, Keller & Riederer**
**Patentanwälte**
**Prinzregentenstrasse 16**
**80538 München (DE)**

(56) References cited:
**EP-A- 0 646 327          DE-A- 2 355 083**
**DE-A- 4 141 448          FR-A- 2 230 303**
**GB-A- 2 025 197          US-A- 3 656 969**

**Description**

FIELD OF THE INVENTION

The invention relates to a process for applying a flavor component to water-containing, chunky frozen food and a seasoning mixture therefor.

BACKGROUND OF THE INVENTION

In the frozen food industry, the flavor component is conventionally introduced by a fat-containing mixture. The flavor component mainly comprises salts or contains such. A dry mixture having such flavor components therefore produces a thawing salt effect which leads to non-uniform application and aggregation of the piece-form frozen food.
An attempt has been made to overcome this problem by coating the dry salt component with fat. However, if sufficient fat is used to coat the salt and thus avoid the thawing salt effect, such a mixture does not adhere sufficiently to the frozen product. Peas are particularly problematic in this case, because the coated flavor component easily trickles through the frozen pea material.
Processes for coating frozen foods are frequently described in the literature. For example, Horn. U.S. Patent No. 3,656,969 discloses a process for producing a breaded vegetable product by applying a liquid batter, breading and freezing.
DE-A 23 55 083, corresponding to Fallon et al., U.S. Patent No. 3,868,470, relates to a process for applying seasoning sauces to frozen foods to improve their flavor. The sauce is applied in the form of a viscous suspension composed of seasoning, water, and hydrocolloid such as a pregelatinized starch.
DE-A 41 41 448 relates to a process for producing frozen ready-to-eat convenience meals, the frozen piece-form components being mixed in a rotating mixer and being coated by spraying with a heated sauce emulsion. The coating is uniformly deposited and solidly frozen onto individual components under continued rotation.
DE-C 28 30 918. corresponding to GB2 025 197, relates to a process for producing deep-frozen dishes or meals of the hot-pot or casserole type. The dish mixture comprises particles of deep-frozen, at least partially cooked, vegetables and a dry thickening agent to the vegetable particles with a liquid granulating agent.
Karnetzli et al., DE-C 38 28 740 discloses a process for producing frozen convenience meals which may be portioned as desired and are covered with flavorings. Frozen piece-form foods are mixed, set into turbulence in a special apparatus, and liquid fat is first applied dropwise to the rotating product and then a previously prepared mixture of dry flavorings is added by simply being allowed to fall on the product. The individual process steps in this process must be carried out at temperatures above the freezing point. Flavorings used are a homogenized dry mix of spices and powdered creams starch and powdered crème fraiche.
Each of these known processes requires a special apparatus and is not simple to carry out.
The object, therefore, underlying the present invention is to provide a seasoning mixture which does not cause a thawing salt effect but which nevertheless can be uniformly distributed in the frozen product and adheres sufficiently to it and, at the same time, has a minimal adhesion to the vessel in which the seasoning mixture is applied to the frozen food.
Another object of the present invention is to provide a process which does not require a special apparatus and is simple to carry out.

SUMMARY OF THE INVENTION

These objects are achieved according to the invention by a seasoning mixture which comprises a dry mixture of fat-coated seasoning salts, and further contains from about 5 to about 80% by weight of a special adhesive agent. An adhesive agent may be chosen from the group comprising native starch, yeast powder, soya powder maltodextrin and skimmed milk powder. The invention also provides a process for applying a flavoring component to water-containing, piece-form frozen food, wherein said frozen product is mixed dry with the seasoning mixture of the present invention.

DETAILED DESCRIPTION

The seasoning mixture according to the present invention comprises a dry mixture of seasoning salts and fats and additionally contains from about 5 to about 80% by weight, preferably from about 5 to about 50% by weight of an adhesive agent selected from the group consisting of native starch, yeast powder, soya powder, maltodextrin and skimmed milk powder.
The fat content is usually from about 2 to about 90 percent, preferably 3 to 30%, by weight. The content of seasoning salts is usually from about 5 to about 93 percent, preferably 30 to 60%, by weight.

In particular, the seasoning salts are common salt and/or glutamate, and may additionally contain considerable amounts of spices and other flavoring components. Other usual constituents of such seasoning salts are dry products which are produced by the digestion of vegetable protein sources and contain certain amino acids. Liquid constituents can also be processed in association, as long as it is ensured that the seasoning mixture overall is dry and flowable, and preferably is in the form of powder or granules.

The choice of adhesive agents is of particular importance for the adhesion properties of the seasoning mixture according to the invention.

If starches are used, the starch must be a native starch which does not swell. Swelling properties must be avoided, otherwise lumping easily occurs. Therefore, the starch to be used according to the invention should also be as dry as possible for best results. The starch should have a water content below 18 percent, preferably below 10%, by weight. Such starches show a good adhesion effect, to the extent that the seasoning mixture remains well adhered on the frozen material. At the same time, they show an anti-stocking effect which avoids agglomeration of the frozen product and minimizes the adhesion to the vessels. The starches used according to the invention have sufficient water absorption capacity without, however, swelling. Native starch absorbs up to 30% water without swelling. Cold-swelling starches must not be used, since they lead to lumping effects. The preferred starch is potato starch, although starches from other sources may also be used.

The concomitant use of fat in the seasoning mixture according to the invention is essential to prevent the thawing effect caused by the seasoning salts.

Various fats can be used for coating the seasoning salts. Hardened fats are as equally suitable as, for example, sunflower seed oil.

A particular advantage of the seasoning mixture according to the invention is that it may easily be mixed dry with the frozen product, without requiring a special apparatus. Uniform adhesion to the piece-form frozen product occurs without this agglomerating. The mixing is to take place at a temperature which ensures that the temperature in the material being mixed remains below the freezing temperature.

The process according to the invention is suitable particularly for processing small vegetable pieces, especially peas. Peas processed according to the invention can easily be portioned, since they remain readily pourable and the flavor component is uniformly distributed on them.

The invention is described in more detail by the example below, which is not meant to be limited in any way:

Example

A seasoning mixture was prepared from the following constituents:

| | |
|---|---|
| Common salt | 50% |
| Monosodium glutamate | 23% |
| Native potato starch (water content 6 - 18%) | 10% |
| Hardened fat | 6% |
| Sunflower seed oil | 6% |
| Onion powder | 3% |
| Spices | 2% |
| | 100% |

The seasoning salts containing the spices were coated with the fat component and the starch was mixed in.

30 g of this seasoning mixture were mixed for one minute with 1.5 kg of frozen peas in a precooled Hobart mixer having a small beating vessel for one minute. The mixing was carried out at a temperature of -20°C.

The seasoning mixture adhered well to the peas, but only slightly to the vessel.

**Claims**

1. A seasoning mixture for frozen food comprising a dry mixture of seasoning salts and fat, wherein said mixture comprises from about 5 to about 80% by weight of an adhesive agent chosen from the group comprising native starch, yeast powder, soya powder, maltodextrin, and skimmed milk powder.

2. The seasoning mixture of claim 1, wherein said mixture comprises from about 5 to about 50% by weight of said adhesive agent.

3. The seasoning mixture of claim 1, wherein said mixture comprises from about 2 to about 90% by weight of said fat.

4. The seasoning mixture of claim 3, wherein said mixture comprises from about 3 to about 30% by weight of said fat.

5. The seasoning mixture of claim 1, wherein said mixture comprises from about 5 to about 93% by weight of said seasoning salts.

6. The seasoning mixture of claim 5, wherein said mixture comprises from 30 to about 60% by weight of said seasoning salts.

7. The seasoning mixture of claim 1 wherein said seasoning salt is chosen from the group comprising common salt, glutamate, and mixtures thereof.

8. The seasoning mixture of claim 7 wherein said seasoning salt further comprises spices and other flavoring components.

9. The seasoning mixture of claim 8 wherein said seasoning salt further comprises spices and other flavoring components.

10. The seasoning mixture of claim 1 wherein said mixture is in the form of powder.

11. The seasoning mixture of claim 10 wherein said mixture is in the form of granules.

12. The seasoning mixture of claim I wherein said adhesive agent is a native starch having a water content below about 18% by weight.

13. The seasoning mixture of claim 12 wherein said adhesive agent is a native starch having a water content below about 10% by weight.

14. A process for applying a flavoring component to water-containing, piece-form frozen food, wherein said frozen product is mixed dry with a seasoning mixture of claim 1.

15. The process of claim 14, wherein said vegetable pieces are used as frozen food.

16. The process of claim 14, wherein said mixing is carried out at a temperature below the freezing temperature of the material being mixed.

17. A frozen food prepared by the process of claim 14.

**Patentansprüche**

1. Würzmischung für Tiefkühlkost umfassend eine Trockenmischung aus Würzsalzen und Fett, wobei die Mischung etwa 5 bis etwa 80 Gew.-% eines Haftmittels aus der Gruppe native Stärke, Hefepulver, Sojapulver, Maltodextrin und Magermilchpulver enthält.

2. Würzmischung nach Anspruch 1, **dadurch gekennzeichnet, daß** sie etwa 5 bis etwa 50 Gew.-% Haftmittel enthält.

3. Würzmischung nach Anspruch 1, **dadurch gekennzeichnet, daß** sie etwa 2 bis etwa 90 Gew.-% Fett enthält.

4. Würzmischung nach Anspruch 3, **dadurch gekennzeichnet, daß** sie etwa 3 bis etwa 30 Gew.-% Fett enthält.

5. Würzmischung nach Anspruch 1, **dadurch gekennzeichnet, daß** sie etwa 5 bis etwa 93 Gew.-% Würzsalze enthält.

6. Würzmischung nach Anspruch 5, **dadurch gekennzeichnet, daß** sie 30 bis etwa 60 Gew.-% Würzsalze enthält.

7. Würzmischung nach Anspruch 1, **dadurch gekennzeichnet, daß** das Würzsalz ausgewählt wird aus der Gruppe bestehend aus Kochsalz, Glutamat und Mischungen davon.

8.  Würzmischung nach Anspruch 7, **dadurch gekennzeichnet, daß** das Würzsalz weiterhin Gewürze und andere geschmacksgebende Komponenten enthält.

9.  Würzmischung nach Anspruch 8, **dadurch gekennzeichnet, daß** das Würzsalz weiterhin Gewürze und andere geschmacksgebende Komponenten enthält.

10. Würzmischung nach Anspruch 1, **dadurch gekennzeichnet, daß** sie pulverförmig ist.

11. Würzmischung nach Anspruch 10, **dadurch gekennzeichnet, daß** sie granulatförmig ist.

12. Würzmischung nach Anspruch 1, **dadurch gekennzeichnet, daß** das Haftmittel eine native Stärke mit einem Wassergehalt unter etwa 18 Gew.-% ist.

13. Würzmischung nach Anspruch 12, **dadurch gekennzeichnet, daß** das Haftmittel eine native Stärke mit einem Wassergehalt unter etwa 10 Gew.-% ist.

14. Verfahren zum Aufbringen einer Geschmackskomponente auf wasserhaltige, stückige Tiefkühlkost, **dadurch gekennzeichnet, daß** man das gefrorene Gut mit einer Würzmischung nach Anspruch 1 trocken vermischt.

15. Verfahren nach Anspruch 14, **dadurch gekennzeichnet, daß** als Tiefkühlkost Gemüsestückchen eingesetzt werden.

16. Verfahren nach Anspruch 14, **dadurch gekennzeichnet, daß** das Vermischen bei einer Temperatur unterhalb der Gefriertemperatur des Mischguts erfolgt.

17. Tiefkühlkost, hergestellt nach dem Verfahren nach Anspruch 14.

**Revendications**

1.  Mélange d'assaisonnement pour un produit alimentaire congelé, comprenant un mélange sec de sels d'assaisonnement et d'une matière grasse, ledit mélange comprenant environ 5 à environ 80 % en poids d'un agent adhésif choisi dans le groupe consistant en l'amidon naturel, la poudre de levure, la poudre de soja, la maltodextrine et la poudre de lait écrémé.

2.  Mélange d'assaisonnement suivant la revendication 1, ledit mélange comprenant environ 5 à environ 50 % en poids de l'agent adhésif.

3.  Mélange d'assaisonnement suivant la revendication 1, ledit mélange comprenant environ 2 à environ 90 % en poids de la matière grasse.

4.  Mélange d'assaisonnement suivant la revendication 3, ledit mélange comprenant environ 3 à environ 30 % en poids de la matière grasse.

5.  Mélange d'assaisonnement suivant la revendication 1, ledit mélange comprenant environ 5 à environ 93 % en poids des sels d'assaisonnement.

6.  Mélange d'assaisonnement suivant la revendication 1, ledit mélange comprenant 30 à environ 60 % en poids des sels d'assaisonnement.

7.  Mélange d'assaisonnement suivant la revendication 1, dans lequel le sel d'assaisonnement est choisi dans le groupe consistant en le sel de cuisine, un glutamate et leurs mélanges.

8.  Mélange d'assaisonnement suivant la revendication 7, ledit sel d'assaisonnement comprenant en outre des épices et d'autres constituants aromatisants.

9. Mélange d'assaisonnement suivant la revendication 8, dans lequel le sel d'assaisonnement comprend en outre des épices et d'autres constituants aromatisants.

10. Mélange d'assaisonnement suivant la revendication 1, ledit mélange étant sous la forme d'une poudre.

11. Mélange d'assaisonnement suivant la revendication 10, ledit mélange étant sous la forme de granules.

12. Mélange d'assaisonnement suivant la revendication 1, dans lequel l'agent adhésif est un amidon naturel ayant une teneur en eau inférieure à environ 18 % en poids.

13. Mélange d'assaisonnement suivant la revendication 12, dans lequel l'agent adhésif est un amidon naturel ayant une teneur en eau inférieure à environ 10 % en poids.

14. Procédé pour l'application d'un constituant aromatisant à un produit alimentaire congelé sous forme de morceaux, contenant de l'eau, dans lequel ledit produit congelé est mélangé à sec à un mélange d'assaisonnement suivant la revendication 1.

15. Procédé suivant la revendication 14, dans lequel des morceaux de légume sont utilisés comme produit alimentaire congelé.

16. Procédé suivant la revendication 14, dans lequel le mélange est effectué à une température inférieure à la température de congélation de la substance qui est mélangée.

17. Produit alimentaire congelé préparé par le procédé suivant la revendication 14.